# EUROPEAN PATENT SPECIFICATION

(11) **EP 2 345 203 B1**
(45) Date of publication and mention of the grant of the patent: **25.09.2013**
(21) Application number: 08878022.6
(22) Date of filing: 05.11.2008
(51) Int. Cl.: H04L 12/28

(54) **METHOD AND ARRANGEMENT FOR IMPROVED CONFIGURATION OF A NETWORK DEVICE**
VERFAHREN UND ANORDNUNG FÜR VERBESSERTE KONFIGURATION EINER NETZWERKEINRICHTUNG
PROCÉDÉ ET ENSEMBLE POUR LA CONFIGURATION AMÉLIORÉE D'UN DISPOSITIF DE RÉSEAU

(43) Date of publication of application: 20.07.2011
(73) Proprietor: Telefonaktiebolaget L M Ericsson (publ), 164 83 Stockholm (SE)
(72) Inventor: NILSSON, Peter, S-586 63 Linköping (SE); JOHANSSON, Magnus, S-582 72 Linköping (SE)
(74) Representative: Egrelius, Fredrik
(86) International application number: PCT/SE2008/051262
(87) International publication number: WO 2010/053413

(56) References cited:
- WO-A1-2004/088923
- WO-A1-2005/079000
- WO-A2-01/75666
- US-A1- 2004 052 216
- US-A1- 2004 105 444
- US-A1- 2007 097 860
- US-A1- 2007 250 605
- US-A1- 2008 168 524

## Description

### TECHNICAL FIELD

The present invention relates to Internet Protocol Television (IPTV) networks in general, specifically to methods and arrangements for improved management of client devices in such networks.

### BACKGROUND

The so-called IPTV (Internet Protocol Television) is a system where a digital television service is delivered using Internet Protocol over a network infrastructure, which may include delivery by a broadband connection. A general definition of IPTV is television content that instead of being delivered through traditional broadcast and cable formats, is received by the viewer through the technologies used for computer networks. The subscriber is able to received TV programs and services on his TV set connected to an IP network via a terminal called STB (Set Top Box). For residential users IPTV is often provided in conjunction with Video-on-Demand and may be bundled with Internet services such as Web access and VoIP.

WO 2004/088923 discloses where an inside-realm node that wants to connect to an outside-realm through an intermediate gateway requests configuration from a gateway resource manager.

The previously mentioned Set-top-boxes (STB) are adapted to use different configuration parameters to configure the box at boot-time. These configuration parameters are retrieved by using the so-called DHCP protocol. The set of configuration parameters needed by the STB is not standardized and each STB vendor and model may require different sets of parameters.

Upon boot or configuration of the set-top-box, a user or subscriber is forced to manually retrieve suitable configuration parameters for the specific device. For many users this can be a complicated task, and might result in configuration errors and consequently a flawed user experience.

### SUMMARY

Due to the above-mentioned problems, there is a need for methods and arrangements to improve the configuration process to enable more user friendly procedures.

A general aim of the present invention is to provide improved IPTV service., specifically, to provide a simplified and user neutral configuration process.

Basically, the present invention concerns a method in an intermediate gateway device to enable improved configuration of a device in an IP system. The device is typically associated with a first network for utilization of a resource associated with a second network, where the two networks are in communication or connected via the intermediate gateway device. Accordingly, a request for a set of configuration parameters associated with said resource is received (S10) from the device. The configuration request is relayed (S20) to the resource. And, the requested configuration parameters are retrieved and forwarded (S30) from said resource, via the gateway device and to the device to enable improved configuration of the device.

Advantages of the present invention include:
A simplified configuration process
Improved user friendliness
Quicker configuration.

### BRIEF DESCRIPTION OF THE DRAWINGS

The invention, together with further objects and advantages thereof, may best be understood by referring to the following description taken together with the accompanying drawings, in which:
Fig. 1 is an illustration of a general embodiment of a system in which the present invention can be implemented;
Fig. 2 is an illustration of an embodiment of the present invention;
Fig. 3 is a flow diagram of an embodiment a method according to the present invention;
Fig. 4 is an illustration of an embodiment of an arrangement according to the present invention;
Fig. 5 is an illustration of a further embodiment of an arrangement according to the present invention;
Fig. 6 is a flow diagram of an embodiment of a method according to the present invention, applicable in the arrangement of Fig. 5.

### ABBREVIATIONS

- DHCP: Dynamic Host Configuration Protocol
- IPTV: IP Television
- NAT: Network Address Translation
- RGW: Residential GateWay
- STB: Set-Top Box

### DETAILED DESCRIPTION

The present invention will be described in the context of an IPTV network, specifically such a network utilizing the DHCP protocol and with a network address translation (NAT) functionality. However, the invention can be easily generalized to a more general network.

For devices such as STBs connected to an IPTV network via a bridging or routing so called Residential Gateway (RGW) the configuration e.g. DHCP requests from the STB can be forwarded to and answered typically by a DHCP Server in the IPTV network with standard methods, normal DHCP or DHCP Relaying.

When the STB is connected to a gateway unit or device that is configured to use NAT, which is very common for such gateway devices, the DHCP server is normally located in the RGW. The problem of known systems is to get the DHCP options to the STB for different STB vendors and models when the STB is not served by the DHCP server in the IPTV network. DHCP relaying is not suitable since the RGW is normally using private IP addresses on the LAN side. The DHCP server in the RGW is therefore statically configured with the needed DHCP options, which provide the STB with its configuration.

Since the RGW is located at the end users premises, the configuration of the RGW has to be performed by the end user. However, this may be a complicated task for the unskilled user, which may lead to un-necessary support calls and bad user experience of the IPTV service.

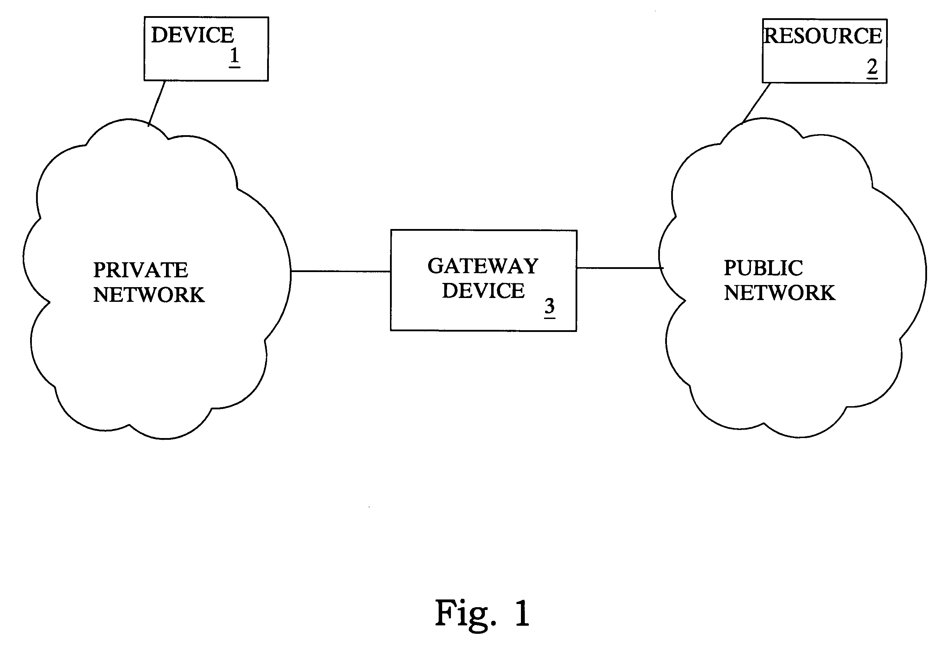

With reference to the schematic system in FIG. 1, in its most basic form, the present invention enables relaying requests for specific information between a device 1 associated with a private network and a resource provider 2 associated with a public network. This is enabled by means of a "man in the middle" solution in a gateway device 3 or similar device connecting the two networks.

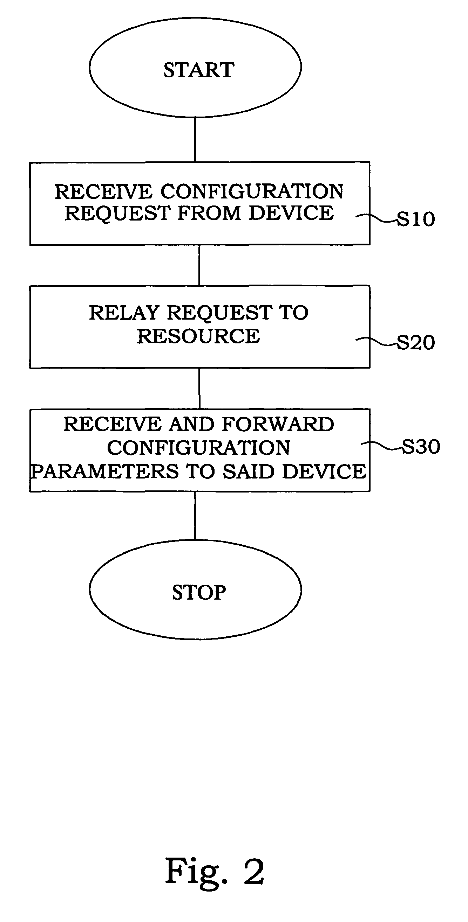

A basic embodiment of a method according to the invention will be described with reference to the system in FIG. 1, and the flow chart in FIG. 2. A user initiates a procedure for a device 1 e.g. a set top box or similar device, located in a private network, the procedure can be a configuration process for a communication session with a resource e.g. an IPTV provider or other service provider 2 that is located on another and public network. The two networks are typically connected or in communication with each other via an intermediate device, such as a gateway unit 3. In order to perform the procedure successfully, the device 1 needs configuration parameters from the resource 2. Consequently, a request for configuration parameters are sent to and received S10 at the gateway unit 3. The gateway unit is adapted to relay S20 the configuration request to the resource 2, and to receive and forward S30 configuration parameters back to the device 1. Thereby, providing the necessary information for a simplified configuration process.

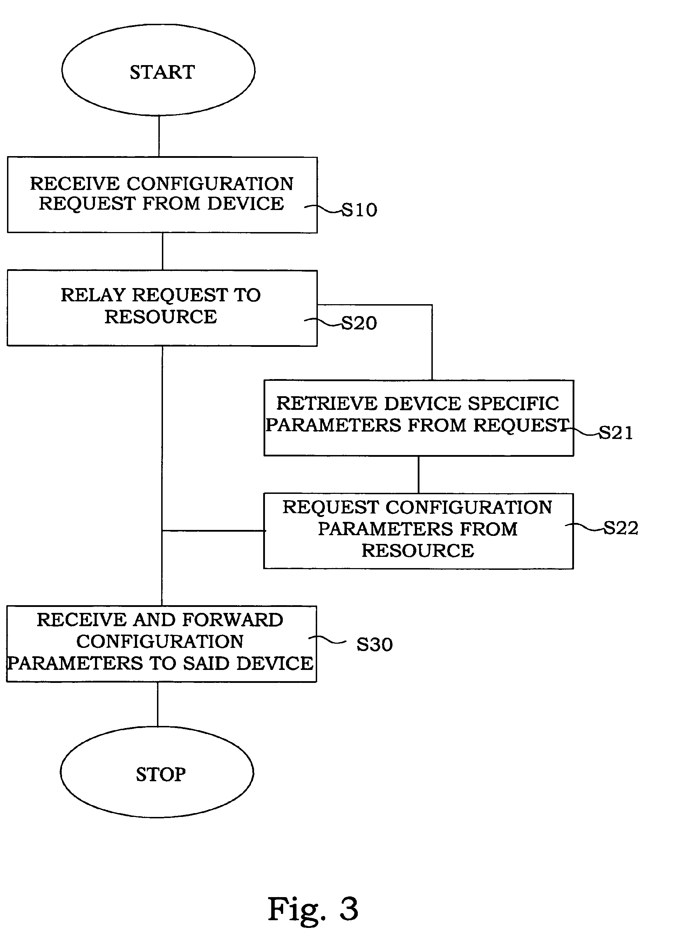

As mentioned previously, gateway devices and particularly residential gateway devices in IPTV networks are typically adapted to utilize Network Address Translation (NAT). NAT is a translation mechanism, which provides an interface between the set of IP addresses of the private network and the separate set of IP addresses of the public network. However, the use of NAT in a conventional manner prevents a request for device specific configuration parameters to be sent directly from the device, via the gateway and further on to the resource. Thus, the implementation of a method according to a further embodiment of the present invention will be described with reference to FIG. 3.

With reference to FIG. 3, the step of relaying S20 the configuration request in the gateway device is adapted to include a set of additional steps. In a first step S21 a set of device-specific parameters are retrieved from the configuration request. This is performed in order to enable the resource to identify the specific configuration parameters that are needed for the particular device. In a second step S22 the configuration parameters are requested from the resource based on the actual configuration request and the identified device specific parameters. Finally, the configuration parameters are received and forwarded S30 back to the device and the configuration can be concluded.

According to a further embodiment (not shown) upon receiving a configuration request in the gateway device, a search is performed. In this search, a storage device or memory is searched for previously received configuration parameters for the device. If there are locally stored configuration parameters for the device, those are communicated back to the device, thus rendering any step of retrieving a new set of configuration parameters from the resource un-necessary. However, since parameters may change and become obsolete, the method according to the present invention can be made conditional. In other words, if there is an available already stored set of parameters, but they set is older than a predetermined time interval, the process of requesting parameters from the resource is implemented. In this manner, the configuration process can be speeded up in cases of frequent configuration requests from the same device, while at the same time ensuring that the configuration parameters used are up to date.

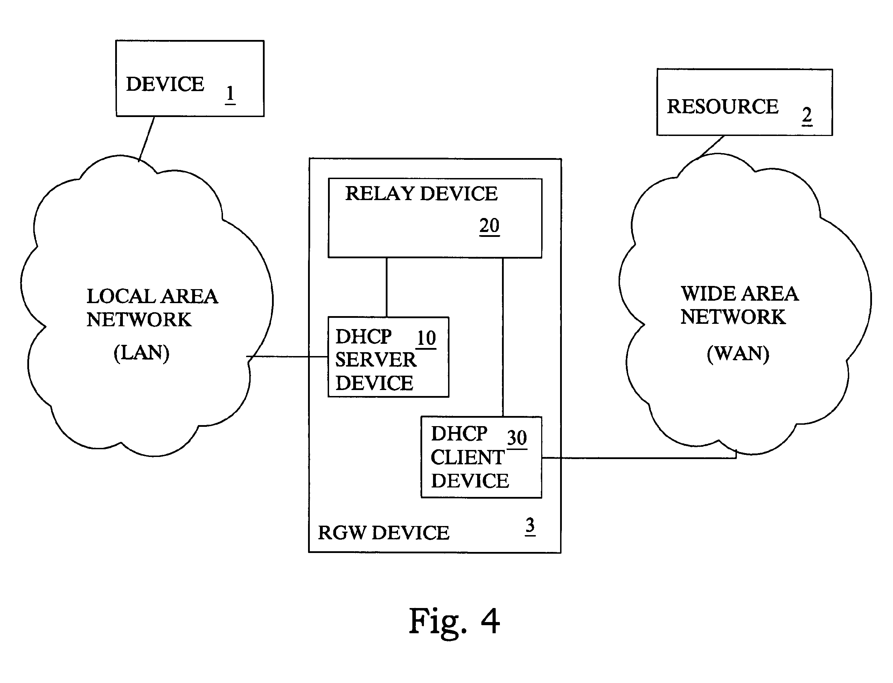

With reference to FIG.4, a basic embodiment of an arrangement in a gateway device according to the present invention will be described.

The gateway device 3, arranged for use in an IP system, connects or enables communication between a user device 1 associated with a first network e.g. private network, and a resource or service provider 2 associated with a second network e.g. public network. Accordingly, the gateway device 3 comprises a unit 10 for receiving requests for configuration parameters from the user device 1. Further, a relaying unit 20 is adapted to relay the request from the device 1 to the resource 2. The relaying unit 20 is adapted to process the request from the receiving unit 10 and provide an adapted request at a retrieving and forwarding unit 30 that is arranged to retrieve configuration parameters from the resource 3 and forward them back to the device 1.

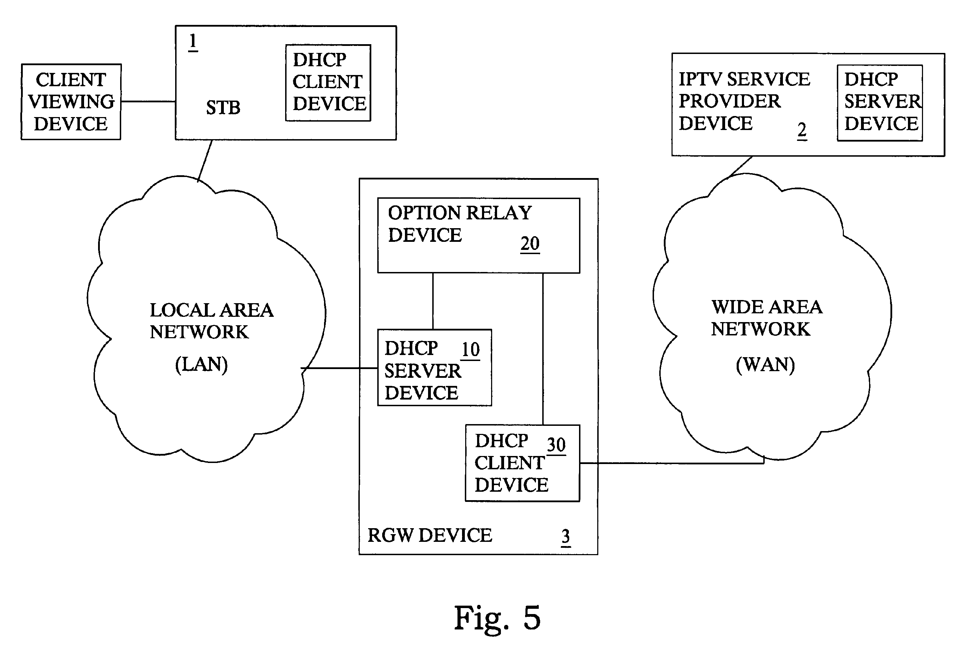

With reference to FIG. 5, a specific embodiment of a gateway device 3 will be described. Accordingly, a DHCP option relay 20 is implemented in or associated with a residential gateway device (RGW) 3. The option relay 20 serves to manage and translate specific information requests from a client device 1 of a private network e.g. LAN received at a server device 10 in the RGW, and adapting and forwarding those requests via a client device 30 in the RGW to a server device in or associated with a public network e.g. WAN. In the illustration of the embodiment, a LAN illustrates the private network, and the public network is illustrated by a WAN, but it is evident that the same solution can be applied to any combination of public and private networks where an exchange of specific information is necessary.

By introducing DHCP option relaying in the RGW 3, the need for end user configuration can be avoided. The DHCP option relay device 20 will interact with the DHCP server 10 on the LAN side and the DHCP client 30 on the WAN side. The DHCP option relay 20 retrieves the necessary information that identifies the STB from the STBs DHCP request and instructs the DHCP client 30 to retrieve the needed configuration information from the DHCP server on the IPTV network. The received information will be forwarded back to the STB via the DHCP option relay 20. DHCP inform messages can preferably be used for these requests.

By using the DHCP option relaying in the RGW the installation time and success rate for the installation of an IPTV STB can be improved.

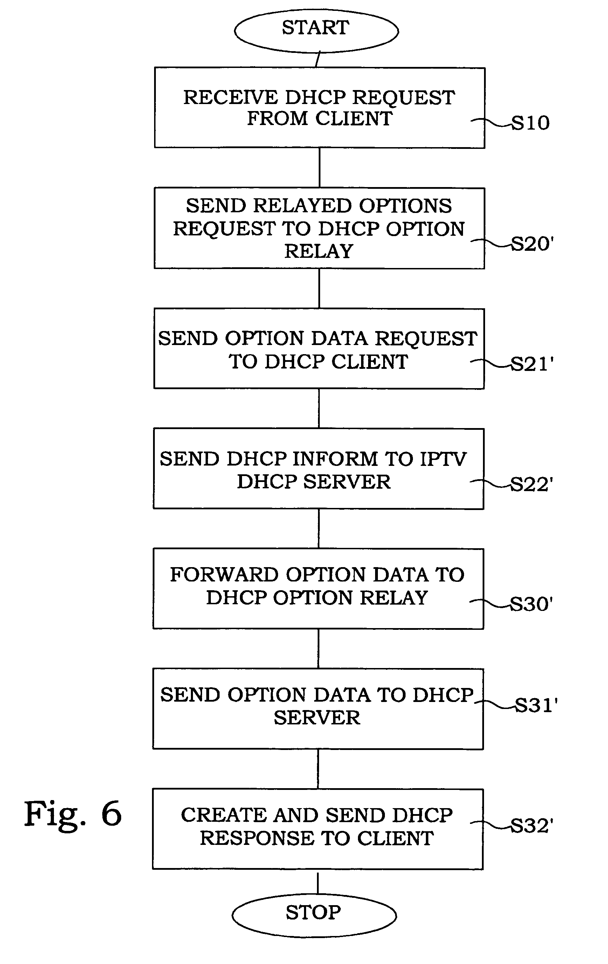

A particular embodiment of a method according to the present invention will be described with reference to FIG. 5 and FIG. 6.

Consider the situation where a client is in the process of activating and configuring his set top box 1 in a local area network (LAN). The local network is in communication with a wide area network (WAN) via a residential gateway RGW 3. The gateway RGW comprises a DHCP server device 10 for the LAN and a DHCP client device 30 for the WAN. In addition, the gateway RGW comprises or is associated with a DHCP option relay device 20, which is in communication with or bridges both the DHCP server 10 and the DHCP client 20.

On initiation by the user, the STB client device transmits a DHCP request S10 to the DHCP server in the gateway RGW. In response thereto the DHCP server 10 sends a request S20' for relayed options to the DHCP option relay 20. In turn, the option relay 20 sends an option data request S21' to the DHCP client 30. Subsequently, the DHCP client 30 sends S22' a DHCP inform message to the resource e.g. DHCP server in the WAN or IPTV service network. An answer to the DHCP inform message is received at the DHCP client 30 and forwarded S30' to the DHCP option relay 20. Subsequently, the DHCP option relay 20 sends S31' the option data to the DHCP server10, which in turn creates a full DHCP response and sends S32' it to the STB client to complete the set up or configuration.

The arrangements according to the present invention can be further provided with means for storing previously retrieved sets of configuration parameters for each device associated with the private network. At least each device that has previously performed a boot or configuration. Upon receiving a request for configuration parameters, the relay is typically adapted to search a storage device or memory cache for previously retrieved sets of configuration parameters. If there are such sets available, the relay is adapted to enable the parameters to be sent directly back to the requesting device, without any need for retrieving them from the resource. However, since parameters can change and become obsolete, it is preferable to make this step conditional. Thus, if there are previously retrieved sets for parameters, a further check has to be performed to determine if the sets are still valid. In other words, preferably setting a condition that only previously received sets of configuration parameters that were received within a predetermined time period can be used. If the sets are older than the set limit, then the basic embodiment of the method is continued with relaying of the request to the resource and retrieving and forwarding the parameters back to the device for configuration.

The functionalities of the arrangements according to the present invention can be implemented using hardware or software or a mixture of both.

Advantages of the present invention comprise
Improved configuration accuracy
Reduced installation and configuration time
User neutral configuration

It will be understood by those skilled in the art that various modifications and changes may be made to the present invention without departure from the scope thereof, which is defined by the appended claims.

## Claims

1. A method in an Network Address Translation configured intermediate gateway device enabling configuration of a user device in an IP system, said user device being associated with a first network for utilization of a resource associated with a second network, where said two networks are in communication via said intermediate gateway device, **characterized by** the steps of:
in said intermediate gateway device
receiving (S 10), a request for a set of configuration parameters associated with said resource from said user device;
retrieving (S21) a set of device-specific parameters from the configuration request;
requesting (S22) a set of configuration parameters from the resource based on said configuration request and said identified device specific parameters;
and
retrieving and forwarding (S30) said requested set of configuration parameters from said resource to said user device to enable configuration of said user device.

2. The method according to claim 1, **characterized in that** said first network is a private network and said second network is a public network.

3. The method according to claim 2, **characterized in that** said private network is a local area network, and said public network is a wideband area network, and said intermediate gateway device is a residential gateway.

4. The method according to claim 3, **characterized in that** said user device is a set-top-box and said resource is an IPTV provider.

5. The method according to claim 4, **characterized in that** said configuration request comprises a DHCP request, and said step (S22') comprises sending a DHCP Inform message to said IPTV provider.

6. The method according to claim 1, **characterized by** the additional step of searching a storage device in said intermediate gateway device for previously received sets of configuration parameters for said user device.

7. The method according to claim 6, **characterized by** performing the step of requesting said set of configuration parameters if said storage device does not contain previously received set of configuration parameters for said user device.

8. The method according to claim 7, **characterized by** performing the step of relaying said request if said storage device contains sets of configuration parameters which where received outside a predetermined time interval.

9. A Network Address Translation configured intermediate gateway device enabling configuration of a user device in an IP system, said user device being associated with a first network for utilization of a resource associated with a second network, where said two networks are connected via said intermediate gateway device, **characterized by**:
means for receiving (10) a request for a set of configuration parameters associated with said resource from said user device;
means for retrieving (S21) a set of device-specific parameters from the configuration request;
means for requesting (S22) set of configuration parameters from the resource based on said configuration request and said identified device specific parameters;
; and
means for retrieving and forwarding (30) said requested set configuration parameters from said resource to said device to enable configuration of said user device.

## Patentansprüche

1. Verfahren in einer NAT(Netz-Adressübersetzung)-konfigurierten dazwischenliegenden Gateway-Einrichtung, die die Konfiguration einer Benutzereinrichtung in einem IP-System ermöglicht, wobei die Benutzereinrichtung mit einem ersten Netz zur Nutzung einer Ressource assoziiert ist, die mit einem zweiten Netz assoziiert ist, wo die zwei Netze über die dazwischenliegende Gateway-Einrichtung in Kommunikation stehen, **gekennzeichnet durch** folgende Schritte:
in der dazwischenliegenden Gateway-Einrichtung
von der Benutzereinrichtung eine Anforderung für eine Menge von Konfigurationsparametern empfangen (S 10), die mit der Ressource assoziiert sind;
Abrufen (S21) einer Menge von einrichtungsspezifischen Parametern von der Konfigurationsanforderung;
Anfordern (S22) einer Menge von Konfigurationsparametern von der Ressource auf der Basis der Konfigurationsanforderung und der identifizierten einrichtungsspezifischen Parameter; und
Abrufen und Weiterleiten (S30) der angeforderten Menge von Konfigurationsparametern von der Ressource an die Benutzereinrichtung, um die Konfiguration der Benutzereinrichtung zu ermöglichen.

2. Verfahren nach Anspruch 1, **dadurch gekennzeichnet, dass** das erste Netz ein privates Netz ist und das zweite Netz ein öffentliches Netz ist.

3. Verfahren nach Anspruch 2, **dadurch gekennzeichnet, dass** das private Netz ein lokales Netz ist und das öffentliche Netz ein Breitbandnetz ist und die dazwischenliegende Gateway-Einrichtung ein Residential Gateway ist.

4. Verfahren nach Anspruch 3, **dadurch gekennzeichnet, dass** die Benutzereinrichtung eine Set-Top-Box ist und die Ressource ein IP-Fernsehanbieter ist.

5. Verfahren nach Anspruch 4, **dadurch gekennzeichnet, dass** die Konfigurationsanforderung eine DHCP(Dynamisches Host-Konfigurationsprotokoll)-Anforderung umfasst und der Schritt (S22') das Senden einer DHCP-INFORM-Nachricht an den IP-Fernsehanbieter umfasst.

6. Verfahren nach Anspruch 1, **gekennzeichnet durch** den zusätzlichen Schritt des Durchsuchens einer Speichereinrichtung in der dazwischenliegenden Gateway-Einrichtung nach vorher empfangenen Mengen von Konfigurationsparametern für die Benutzereinrichtung.

7. Verfahren nach Anspruch 6, **dadurch gekennzeichnet, dass** der Schritt ausgeführt wird, die Menge von Konfigurationsparametern anzufordern, falls die Speichereinrichtung keine vorher empfangene Menge von Konfigurationsparametern für die Benutzereinrichtung enthält.

8. Verfahren nach Anspruch 7, **dadurch gekennzeichnet, dass** der Schritt des Weitermeldens der Anforderung ausgeführt wird, falls die Speichereinrichtung Mengen von Konfigurationsparametern enthält, die außerhalb eines vorgegebenen Zeitintervalls empfangen wurden.

9. NAT(Netz-Adressübersetzung)-konfigurierte dazwischenliegende Gateway-Einrichtung, die die Konfiguration einer Benutzereinrichtung in einem IP-System ermöglicht, wobei die Benutzereinrichtung mit einem ersten Netz zur Nutzung einer Ressource assoziiert ist, die mit einem zweiten Netz assoziiert ist, wo die zwei Netze über die dazwischenliegenden Gateway-Einrichtung verbunden sind, **gekennzeichnet durch**:
Mittel, um von der Benutzereinrichtung eine Anforderung für eine Menge von Konfigurationsparametern zu empfangen (10), die mit der Ressource assoziiert sind;
Mittel zum Abrufen (S21) einer Menge von einrichtungsspezifischen Parametern von der Konfigurationsanforderung;
Mittel zum Anfordern (S22) einer Menge von Konfigurationsparametern von der Ressource auf der Basis der Konfigurationsanforderung und der identifizierten einrichtungsspezifischen Parameter; und
Mittel zum Abrufen und Weiterleiten (30) der angeforderten Menge von Konfigurationsparametern von der Ressource an die Einrichtung, um die Konfiguration der Benutzereinrichtung zu ermöglichen.

## Revendications

1. Procédé mis en oeuvre dans un dispositif de passerelle intermédiaire configuré pour une traduction d'adresse réseau permettant la configuration d'un dispositif d'utilisateur dans un système IP, ledit dispositif d'utilisateur étant associé à un premier réseau en vue de l'utilisation d'une ressource associée à un second réseau, où lesdits deux réseaux sont en communication par l'intermédiaire dudit dispositif de passerelle intermédiaire, **caractérisé par** les étapes ci-dessous consistant à :
dans ledit dispositif de passerelle intermédiaire
recevoir (S10) une demande concernant un ensemble de paramètres de configuration associé à ladite ressource à partir dudit dispositif d'utilisateur ;
extraire (S21) un ensemble de paramètres spécifiques au dispositif de la demande de configuration ;
demander (S22) un ensemble de paramètres de configuration à partir de la ressource sur la base de ladite demande de configuration et desdits paramètres identifiés spécifiques au dispositif ; et
extraire et acheminer (S30) ledit ensemble de paramètres de configuration demandé de ladite ressource audit dispositif d'utilisateur, en vue de permettre la configuration dudit dispositif d'utilisateur.

2. Procédé selon la revendication 1, **caractérisé en ce que** ledit premier réseau est un réseau privé et ledit second réseau est un réseau public.

3. Procédé selon la revendication 2, **caractérisé en ce que** ledit réseau privé est un réseau local, ledit réseau public est un réseau à large bande, et ledit dispositif de passerelle intermédiaire est une passerelle résidentielle.

4. Procédé selon la revendication 3, **caractérisé en ce que** ledit dispositif d'utilisateur est un boîtier décodeur et ladite ressource est un fournisseur de service IPTV.

5. Procédé selon la revendication 4, **caractérisé en ce que** ladite demande de configuration comprend une demande de protocole DHCP, et ladite étape (S22') consiste à envoyer un message d'information de protocole DHCP audit fournisseur de service IPTV.

6. Procédé selon la revendication 1, **caractérisé par** l'étape supplémentaire consistant à rechercher, dans un dispositif de stockage dudit dispositif de passerelle intermédiaire, des ensembles de paramètres de configuration reçus précédemment pour ledit dispositif d'utilisateur.

7. Procédé selon la revendication 6, **caractérisé par** la mise en oeuvre de l'étape consistant à demander ledit ensemble de paramètres de configuration si ledit dispositif de stockage ne contient pas d'ensemble de paramètres de configuration reçu précédemment pour ledit dispositif d'utilisateur.

8. Procédé selon la revendication 7, **caractérisé par** la mise en oeuvre de l'étape consistant à relayer ladite demande lorsque ledit dispositif de stockage contient des ensembles de paramètres de configuration qui ont été reçus en dehors d'un laps de temps prédéterminé.

9. Dispositif de passerelle intermédiaire configuré pour une traduction d'adresse réseau permettant la configuration d'un dispositif d'utilisateur dans un système IP, ledit dispositif d'utilisateur étant associé à un premier réseau en vue de l'utilisation d'une ressource associée à un second réseau, où lesdits deux réseaux sont connectés par l'intermédiaire dudit dispositif de passerelle intermédiaire, **caractérisé par** :
un moyen pour recevoir (10) une demande concernant un ensemble de paramètres de configuration associé à ladite ressource à partir dudit dispositif d'utilisateur ;
un moyen pour extraire (S21) un ensemble de paramètres spécifiques au dispositif de la demande de configuration ;
un moyen pour demander (S22) un ensemble de paramètres de configuration à partir de la ressource sur la base de ladite demande de configuration et desdits paramètres identifiés spécifiques au dispositif ; et
un moyen pour extraire et acheminer (30) ledit ensemble de paramètres de configuration demandé de ladite ressource audit dispositif, en vue de permettre la configuration dudit dispositif d'utilisateur.
